# Europäisches Patentamt
# European Patent Office
# Office européen des brevets

(11) Veröffentlichungsnummer: **0 174 520**
**B1**

(12) **EUROPÄISCHE PATENTSCHRIFT**

(45) Veröffentlichungstag der Patentschrift:
**23.11.89**

(51) Int. Cl.⁴: **H02M 7/757, H02J 3/36**

(21) Anmeldenummer: **85110383.8**

(22) Anmeldetag: **19.08.85**

(54) Verfahren und Vorrichtung zum Unterdrücken von Resonanzerscheinungen im wechselrichterseitigen Wechselspannungnetz einer Hochspannungsgleichstromübertragungsanlage.

(30) Priorität: **30.08.84 DE 3431979**

(73) Patentinhaber: **Siemens Aktiengesellschaft, Wittelsbacherplatz 2, D-8000 München 2(DE)**

(43) Veröffentlichungstag der Anmeldung:
**19.03.86 Patentblatt 86/12**

(72) Erfinder: **Weibelzahl, Manfred, Dipl.-Ing., Eichenweg 10, D-8525 Uttenreuth(DE)**
Erfinder: **Wild, Georg, Zedernstrasse 20, D-8521 Langensendelbach(DE)**
Erfinder: **Sadek, Kadry, Dr., Silcherweg 5, 7898 Lauchringen(DE)**

(45) Bekanntmachung des Hinweises auf die Patenterteilung:
**23.11.89 Patentblatt 89/47**

(84) Benannte Vertragsstaaten:
**DE GB SE**

(56) Entgegenhaltungen:
**US-A- 3 453 526**
**US-A- 3 883 792**

## Beschreibung

Die Erfindung geht aus von einem Verfahren zum Betrieb einer Energieübertragungsanlage mit einer Hochspannungsgleichstromübertragungsstrecke (HGÜ) mit den Merkmalen des Oberbegriffes des Anspruchs 1 (US-PS-3 453 526) und hat zum Ziel, Resonanzerscheinungen in dem zweiten Wechselspannungsnetz zu unterdrücken, in das ein als Wechselrichter betriebener, die übertragene Gleichspannung bestimmender Stromrichter einspeist. Die Erfindung betrifft ferner eine Vorrichtung zur Durchführung des Verfahrens.

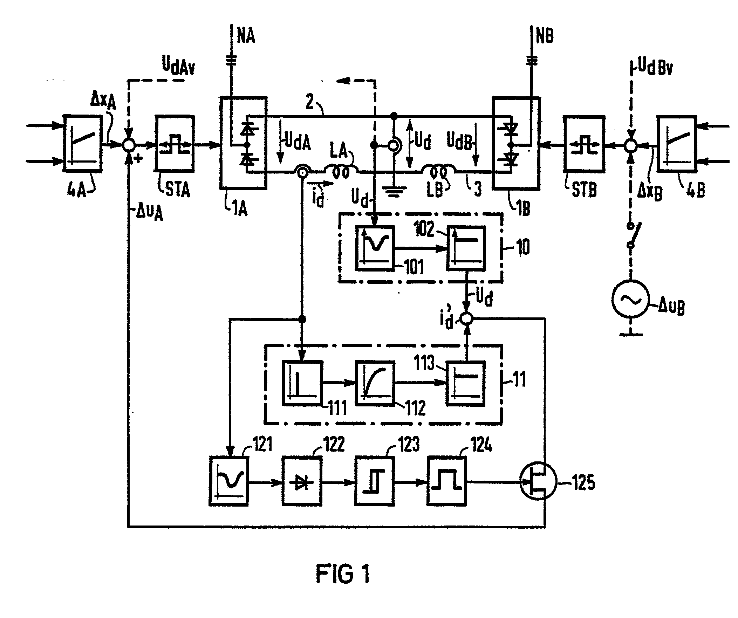

In Figur 1 ist eine zwischen zwei Wechselspannungsnetzen NA, NB angeordnete HGÜ dargestellt, bei der in einer ersten Station ein an das erste Wechselspannungsnetz NA angeschlossener, netzgetakteter, als Gleichrichter betriebener erster Stromrichter 1A der HGÜ durch Stromentnahme aus dem ersten Wechselspannungsnetz einen vorgegebenen Gleichstrom $i_{dA}$ einprägt und in einer zweiten Station (Station B) ein in das zweite Wechselspannungsnetz NB einspeisender, netzgetakteter, als Wechselrichter betriebener zweiter Stromrichter 1B den Pegel $U_{db}$ der übertragenen Gleichspannung bestimmt.

In dem dargestellten, bevorzugten Ausführungsfall einer Kurzkupplung sind die beiden Stationen räumlich eng benachbart und die HGÜ besteht lediglich aus den Gleichspannungsleitungen 2 und 3, wobei am Gleichspannungsanschluß jedes Stromrichters eine Stromrichterdrossel LA und LB angeordnet ist. Jede Station enthält einen Regler 4A, 4B, dessen Ausgangssignal als Steuerspannung $\Delta x_A$ bzw. $\Delta x_B$ den Steuerwinkel für den Steuersatz STA bzw. STB des jeweiligen Stromrichters bestimmt. Die Steuersätze sind durch (nicht dargestellte) Zusatzeinrichtungen, z.B. zur Linearisierung der Kennlinie und/oder zur Umwandlung der analog vorgegebenen Steuerspannung in ein Digitalsignal für den Fall eines digitalisierten Steuersatzes ergänzbar.

Die Steuerspannung $\Delta x_A$ bestimmt die Gleichspannung $U_{dA}$ am Gleichspannungsanschluß des Stromrichters 1A und somit, falls dem Regler 4A (Stromregler) die Regelabweichung des vom Stromrichter 1A eingespeisten Gleichstroms $i_{dA}$ vorgegeben wird, den übertragenen HGÜ-Gleichstrom $i_d$, der gleich dem vom Stromrichter 1B der HGÜ entnommenen und ins Netz NB eingespeisten Gleichstrom $i_{dB}$ ist, da im Fall der Kurzkupplung eventuelle, an Thyristoren und Drosseln auftretenden Stromverluste vernachlässigt werden können ($i_d = i_{dA} = i_{dB}$). Dem Regler 4B der Station B (z.B. Spannungsregler oder Löschwinkelregler) kann im Interesse einer Spannungskonstanthaltung des Netzes NB die Regelabweichung der Spannungsamplitude dieses Netzes oder im Interesse eines möglichst hohen Wirkungsgrades für die Leistungsübertragung und einer geringen Blindleistung die Regelabweichung des Löschwinkels des Stromrichters 1B von einem möglichst maximal (d.h. nahe der Wechselrichtertriftgrenze liegenden) vorgegebenen Löschwinkel-Sollwert vorgegeben werden. Seine Steuerspannung $\Delta x_B$ bestimmt die zu dem eingeprägten HGÜ-Strom $i_d$ gehörende Gleichspannung $U_{dB}$ an den Gleichspannungsanschlüssen des Stromrichters 1B und somit den Spannungspegel $U_d$ der übertragenen Gleichspannung, die zwischen den beiden Stromrichterdrosseln LA und LB, im Fall einer HGÜ-Fernleitung vorzugsweise am dem Stromrichter 1A abgewandten Ende der Drossel 1A, abgegriffen ist.

Die beiden Stationen sind über die HGÜ derart miteinander verkoppelt, daß jede Änderung von $\Delta x_B$ und $U_{dB}$ in der Station B entsprechend dem Spannungsabfall an der HGÜ eine Änderung von $U_{dA}$ und somit eine Stromänderung in der Station A hervorruft, die von dem Stromregler 4A ausgeregelt werden muß. Andererseits bedingt jede Änderung von $\Delta x_A$ bzw. $U_{dA}$ in der Station A eine Änderung von $i_d$ und $U_{dB}$ in der Station B, auf die in der Station B der Regler 4B antwortet. Um störende Auswirkungen dieser Verkopplung möglichst gering zu halten, ist bereits vorgeschlagen worden, dem Ausgangssignal $\Delta x_A$ des Stromreglers 4A eine Vorsteuerspannung $U_{dAv}$ aufzuschalten, die direkt am Meßglied für $U_d$ abgegriffen oder mittels einer Rechenschaltung als Modellgröße gebildet ist. Ebenso kann zur Steuerspannung $\Delta x_B$ eine Vorsteuerspannung $U_{dBv}$ aufgeschaltet werden, die auf andere Weise, z.B. durch Berechnung des induktiven Gleichspannungsabfalls des Stromrichters 1B, gebildet ist.

Der Gleichrichterbetrieb in Station A ruft bestimmte Oberschwingungen, z.B. 6., 12. und 18. Harmonische der Gleichrichterfrequenz, in der Gleichspannung $U_d$ hervor, die durch gleichrichterseitige Filterkreise unterdrückt werden können. In der US-PS 3 453 526 ist beschrieben, daß bei bestimmten Zuständen der Station A (wie unsymmetrische Netzspannung oder ungleiche Zündwinkel) auch eine Grundschwingung oder andere Harmonische des Netzes A in die HGÜ eingespeist werden können und natürliche Resonanzen der HGÜ anregen, wobei aber eigene, ständig arbeitende Filterkreise unwirtschaftlich wären. Deshalb wird die betreffende kritische Schwingung im Falle ihres Auftretens über ein Filter isoliert, dessen Amplitudenverstärkung für diese Frequenz hoch ist. Dadurch wird eine zur Unterdrückung der kritischen Schwingung geeignete Vorsteuerspannung erhalten.

Dieser Vorschlag sieht also bei einer Störgröße in einem Wechselspannungsnetz einen Eingriff auf den an dieses Wechselspannungsnetz angeschlossenen Stromrichter vor. Dies ist auch in der US-PS 3 883 792 vorgesehen, wo am gestörten Wechselspannungsnetz auftretende Harmonische von Spannung und/oder Strom erfaßt, bewertet und zu einer Steuerwinkelkorrektur des angeschlossenen Umrichters verwendet werden, um zu einem optimalen Übertragungsverhalten zu kommen.

Für das Netz NB wirkt die HGÜ praktisch so, daß die Spannungsschwingungen am Stromrichter reflektiert werden, wobei eine geringe Welligkeit von $U_d$ und $i_d$ entsteht, die von dem Stromregler 4A ausgeregelt wird, falls dieser Stromregler schnell genug arbeitet. In Figur 1 ist angedeutet, daß das Netz NB eine störende Spannungsschwingung enthalten kann, die auf diese Weise wie eine über eine Störgröße $\Delta U_B$ für den Steuerwinkel $\Delta x_B$ in den HGÜ-Kreis eingekoppelte Schwingung mit einer im allgemeinen veränderten Amplitude, Phase und Frequenz wirkt.

Liegt im Netz NB diese störende Schwingung in der Nähe der Resonanzfrequenz des Netzes und ist der Stromregler 4A nicht in der Lage, die im Gleichstromkreis entstehende Resonanzfrequenz auszuregeln, so kann dadurch diese störende Schwingung derart aufgeschaukelt werden, daß es im HGÜ-Kreis zu einer erheblichen Welligkeit von $U_d$ und $i_d$ kommt, bei der die der vorgesehenen Nennspannung entsprechende Gleichspannung von einer "Resonanzschwingung" überlagert ist, die z.B. 30% der Nennspannung übersteigen und schließlich dazu führen kann, daß die gesamte Anlage abgeschaltet werden muß. Dies ist z.B. in einem konkreten Fall gegeben, bei dem die Resonanzfrequenz des Netzes NB in der Nähe der zweiten harmonischen Schwingung des Netzes NB liegt, wobei sich herausgestellt hat, daß die störende Resonanzfrequenz des Gleichstromkreises ungefähr gleich der Grundschwingung (60 Hz) des Drehstromnetzes NB ist.

Der Erfindung liegt daher die Aufgabe zugrunde, eine derartige Resonanzerscheinung zwischen der wechselrichterseitigen Wechselspannung und der übertragenen Gleichspannung bzw. dem übertragenen Gleichstrom zu unterdrücken.

Der Grundgedanke der Erfindung ist dabei, die Resonanzerscheinung (im Beispiel also die 60-Hz-Schwingung) im Gleichstromkreis zu erfassen und durch einen Eingriff in die Steuerung der Gleichrichterstation zu dämpfen. Da der Regler 4A dieser Station hierfür in der Regel zu träge ist, wird eine der Resonanzerscheinung entsprechende Steuergröße als Vorsteuerspannung $\Delta U_A$ der (ggf. bereits durch die Vorsteuerspannung $U_{dAv}$ vorgesteuerten) Steuerspannung $\Delta x_A$ am Ausgang des Reglers 4A aufgeschaltet. Dadurch wird zwar die Resonanzschwingung im Gleichstromkreis letztlich auch in das Netz NA eingekoppelt; da aber die Resonanzfrequenz des Netzes NA fast stets von der Resonanzfrequenz des Netzes NB verschieden ist und außerdem Phase und Frequenz des Netzes NA sich gegenüber dem Netz NB ständig etwas ändert, kommt es im Netz NA dadurch nicht zu weiteren Resonanzerscheinungen, während die Resonanz des Netzes NB wirksam bedämpft werden kann.

Die zugrunde liegende Aufgabe wird daher gemäß der Erfindung gelöst durch ein Verfahren mit den Merkmalen des Anspruchs 1 bzw. durch eine Vorrichtung mit den Merkmalen des Anspruchs 9. Vorteilhafte Weiterbildungen der Erfindung sind in den Unteransprüchen gekennzeichnet.

Anhand eines Ausführungsbeispiels und der beiden Figuren wird die Erfindung näher erläutert.

Ist der Arbeitspunkt der Station B, insbesondere die Störfrequenz und die Spannung $U_{dB}$ (bzw. die Spannung $U_d$ oder der dadurch hervorgerufene Strom $i_d$) genau genug bekannt, und würde ferner der Istwert der HGÜ-Spannung $U_d$ verzögerungs-frei erfaßt und die Änderung des Steuerwinkels des ersten Stromrichters verzögerungsfrei verstellt werden können, so würde es genügen, aus der HGÜ-Spannung $U_d$ die Resonanzschwingungskomponente (im Beispiel also die 60-Hz-Schwingung) ohne Phasendrehung auszufiltern ("isolieren"). Wird dann die isolierte Schwingungskomponente mit einer auf den Arbeitspunkt abgestimmten Verstärkung zur Steuerspannung addiert, so kann dadurch erreicht werden, daß die Ausgangsspannung $U_{dA}$ proportional und gleichphasig mit der HGÜ-Spannung $U_d$ verändert und damit der Drossel LA ein konstanter Strom $i_d = i_{dA}$ eingeprägt wird. Die HGÜ reflektiert dann also praktisch die im Netz NB enthaltende Störschwingung nicht mehr, sondern sie wird dafür durchlässig: Die Ursache der Resonanzschwingung ist somit weitgehend beseitigt und die Resonanz gedämpft.

Die idealisierenden Voraussetzungen (insbesondere verzögerungsfreies Erfassen und Verstellung der Spannung $U_d$ und Ausfiltern der Resonanzschwingungskomponente ohne Phasendrehung) liegen aber in Wirklichkeit nicht vor. So besitzen die Meßwandler, die zum Erfassen und Heruntertransformieren der Hochspannung $U_d$ nötig sind, eine erhebliche Zeitkonstante, die durch eine zusätzliche Glättung häufig noch vergrößert wird. Auch der Steuersatz des Stromrichters 1A weist einen Schaltverzug und eine zusätzliche Glättung auf. Ein Steuerkreis, der von dem Meßwandler zur Erfassung der Schwingungskomponente über die Addition der aus der Schwingungskomponente abgeleiteten Vorsteuergröße zum Istwert der Schwingungskomponente führt, besitzt also eine Zeitkonstante ("Zeitkonstante der Vorsteuerung"), die berücksichtigt werden muß, um die angestrebte Phasengleichheit von $U_{dA}$ und $U_d$ herzustellen.

Andererseits ist ein Ausfiltern der Schwingungskomponente, die im HGÜ-Gleichstromkreis der Gleichspannung überlagert ist, in der Regel nur unter einer Phasendrehung möglich. Dies kann prinzipiell dazu ausgenutzt werden, durch eine entsprechende Auslegung des nötigen Filterkreises gerade die Zeitkonstante der Vorsteuerung, d.h. den zu dieser Zeitkonstante und der Frequenz der Resonanzschwingung gehörenden Phasenwinkel, auszugleichen. Der Filterkreis zur Erfassung des Meßwertes ist in diesem Fall auf diesen Phasenwinkel $\omega$ abzustimmen. Dadurch ist allerdings nur eine starke Dämpfung für einen bestimmten Arbeitspunkt möglich. Würde daher als Vorsteuergröße nur die isolierte Schwingungskomponente der Spannung gebildet, so muß bei einer Änderung des Arbeitspunktes die Auslegung des Filterkreises (Phasendrehung und Verstärkung) jeweils der Änderung des Arbeitspunktes nachgeführt werden, um z.B. auch bei einer Änderung der Amplitude von $U_d$ oder der Frequenz der Resonanzschwingung eine optimale Dämpfung zu erreichen.

Dabei ist allerdings zu bedenken, daß die aus dem Gleichstrom $i_d$ abgeleitete Vorsteuergröße gerade die Schwingung von $i_d$ dämpft, die zur Bildung der Vorsteuergröße selbst benötigt wird. Je besser also die Dämpfung sein soll, umso schwieriger wird die Erfassung der dämpfenden Vorsteuergröße.

Diese Schwierigkeiten werden vermieden, wenn die Vorsteuerung mit der phasenverschobenen Stromschwingung mit einer Vorsteuerung mit der isolierten, phasenrichtigen Spannungsschwingung kombiniert wird. Es genügt dann, für die Bildung der aus dem Spannungsmeßwert abgeleiteten Führungsgröße einen Filterkreis zu verwenden, der auf einen mittleren Arbeitspunkt abgestimmt ist. Jede Abweichung des aktuellen Arbeitspunktes von diesem mittleren Arbeitspunkt bedeutet dann eine Verstimmung der Resonanzverhältnisse entsprechend einer Überkompensation oder Unterkompensation der Resonanzschwingung, aus der eine Resonanzschwingung im Strommeßwert folgt. Aus dieser Stromresonanz kann dann unter Verstärkung von einer Phasendrehung, die ungefähr 90° beträgt, eine weitere Vorsteuergröße gebildet werden. Durch die Addition der als Summe beider Vorsteuergrößen resultierenden Gesamtvorsteuergröße kann somit bei konstanter Auslegung des Filterkreises eine optimale Dämpfung für innerhalb eines breiten Betriebsbereichs veränderliche Arbeitspunkte erreicht werden.

Das Gleiche wird gemäß der Erfindung dadurch erreicht, daß die Resonanzschwingungskomponente des HGÜ-Stromes $i_d$ ausgefiltert und als Vorsteuergröße zu $\Delta x_A$ addiert wird. Allerdings folgt der Strom $i_d$ der durch eine periodische Änderung des den Stromrichter 1A steuernden Steuerwinkels erzeugten Änderung jeweils mit einer Phasenverschiebung von 90°, so daß zwischen der aus $i_d$ abgeleiteten Vorsteuergröße und der durch die Vorsteuergröße bedingten Verstellung des Steuerwinkels eine Phasendrehung von 90° herzustellen ist.

Dabei hat sich gezeigt, daß die Abstimmung des Filterkreises für den Strommeßwert wenig kritisch ist. Insbesondere ist es häufig nicht erforderlich, für die Phasendrehung der Strom-Resonanzschwingungskomponente über die 90°-Phasenverschiebung hinaus auch noch den durch die erwähnte Zeitkonstante der Vorsteuerung bedingten Phasenwinkel zu berücksichtigen.

Im Ausführungsbeispiel der Figur 1 ist der Filterkreis 10 durch ein auf die mittlere Resonanzfrequenz der Gleichstromkreises, also 60 Hz, abgestimmtes Bandfilter 101 mit einem nachfolgenden Verstärkungsglied 102 realisiert. Dieses Bandfilter isoliert demnach diese Frequenz des Gleichstromkreises vom Gleichstromanteil und von den durch den Stromrichterbetrieb hervorgerufenen Oberwellen und ruft gleichzeitig die gewünschte Phasenverschiebung um den Winkel $\omega$ hervor.

Jede Abweichung von dem dem Filterkreis 10 zugrundegelegten Arbeitspunkt bedingt, daß der Strom $i_d$ eine Welligkeit aufweist. Je nachdem, wie sich z.B. die Gleichspannung $U_d$ oder die Frequenz von NB ändert, kann sich durch die Ausgangsspannung $U'_d$ des Filterkreises 10 eine Überkompensierung oder Unterkompensierung der Resonanz des Netzes ergeben.

Daher ist vorgesehen, auch eine die Resonanz des Gleichstroms $i_d$ erfassende Größe $i'_d$ zu bilden

und der Steuerspannung $\Delta x_A$ derart aufzuschalten, daß dadurch der über- bzw. unterkompensierten Schwingung der Gleichspannung $U_d$ eine der Stromresonanz entsprechende Zusatzschwingung mitgekoppelt bzw. gegengekoppelt wird.

Zu diesem Zweck wird auch die im Meßwert $i_d$ des HGÜ-Stroms enthaltene Resonanzschwingung unter einer Phasendrehung von etwa 90° isoliert, geeignet verstärkt und zusammen mit $U'_d$ der Steuerspannung $x_A$ aufgeschaltet. Das Ausfiltern der Stromresonanzfrequenz und deren Phasendrehung ist im Filterkreis 11 der Anordnung dadurch vorzugsweise realisiert, daß das Differential d/dt ($i_d$) des Gleichstroms gebildet wird, wobei dem Differenzierer 11 ein Glättungsglied 112 mit geringer Glättung nachgeschaltet sein kann. Ferner ist ein Verstärker 113 nachgeschaltet. Die beiden Filterkreise 10 und 11 sind so aufeinander und auf den Betriebsbereich der HGÜ abgestimmt, daß praktisch für alle auftretenden Arbeitspunkte eine optimale Glättung erreicht wird.

Gemäß Fig. 1 ist ferner vorteilhaft vorgesehen, die dämpfende Aufschaltung der Vorsteuergröße $U_A$ nur dann vorzunehmen, wenn eine störende Resonanz im Netz NB und somit eine merkliche Resonanz im Gleichstromkreis auftritt. Daher ist ein auf die störende Resonanzfrequenz (im Beispiel 60 Hz) des Gleichstromkreises abgestimmtes Filter für den Meßwert von $U_d$ (bzw. vorzugsweise von $i_d$) vorgesehen, das die Resonanzfrequenz isoliert, über einen Gleichrichter 122 deren Amplitude bildet und diese einem Schwellwertglied 123 zuführt. Übersteigt die Resonanzamplitude einen vorgegebenen kritischen Schwellwert, so wird ein Zeitglied 124 angestoßen, das einen Transistorschalter 125 leitend ansteuert. Der Schalter 125 schaltet dann während dieser Eingriffzeit die dämpfende Vorsteuergröße $\Delta U_A$ der Steuerspannung auf, während die Resonanzerscheinung im Netz NB gedämpft wird und je nach Netzkonfiguration auch rasch ganz verschwindet.

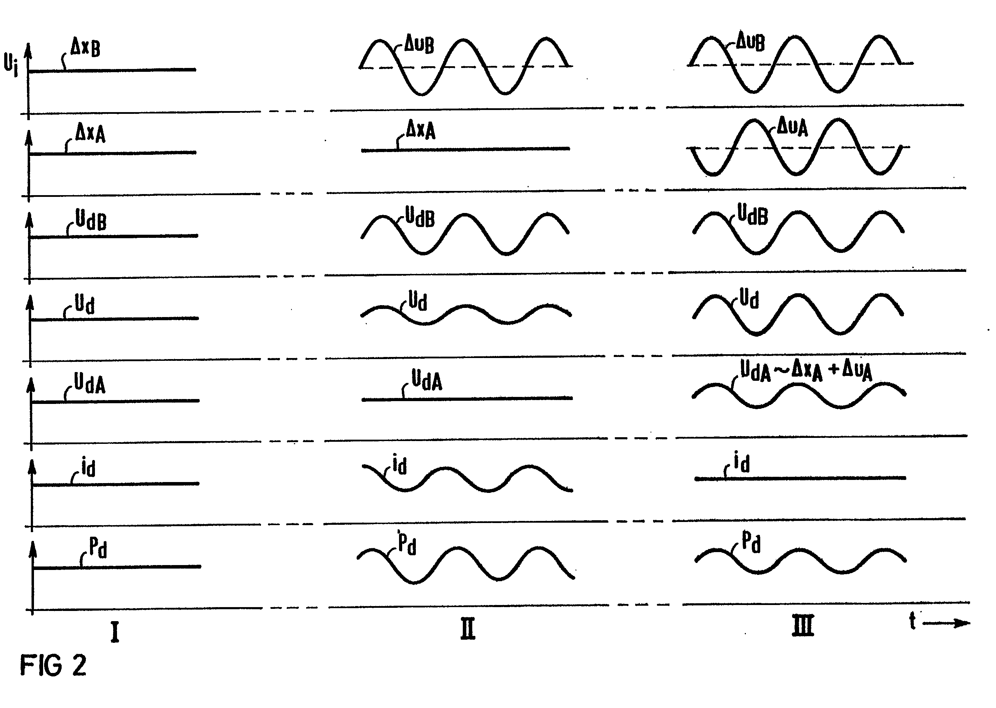

In Fig. 2 sind drei Zustände der Vorrichtung nach Fig. 1 dargestellt. Zunächst ist der Zustand I betrachtet, bei dem die beiden Netze NA und NB lediglich die jeweilige Grundschwingung enthalten, ihre Spannungsamplituden daher proportional der Steuerspannung $\Delta x_A$ und $\Delta x_B$ und somit konstant sind. In diesem ungestörten Fall sind auch die Gleichspannungen $U_d$, $U_{dA}$ und $U_{dB}$, sowie der Gleichstrom $i_d$ und die übertragene Wirkleistung $P_d$ konstant.

Ist nun die Resonanzfrequenz des Netzes NB gleich der zweiten harmonischen Schwingung dieses Wechselspannungsnetzes, so wird dort eine entsprechende Schwingung angeregt, die sich zu einer erheblichen Amplitude aufschaukelt. Diese Resonanzschwingung erzeugt im Meßwert $U_d$ der Gleichspannung eine überlagerte Resonanzfrequenz mit der Grundschwingungsfrequenz, die z.B. dadurch simuliert werden kann, daß dem Steuerwinkel des Steuersatzes 1B eine entsprechende Resonanzschwingung $U_B$ überlagert wird. Mit Auftreten der Resonanz im Netz NB geht also die HGÜ vom ungestörten Zustand 1 in den Resonanzzustand II über.

Der Stromregler 4A vermag diese Schwingung nicht auszuregeln und verbleibt praktisch auf seinem konstanten Wert. Folglich ist auch die Ausgangsgleichspannung $U_{dA}$ konstant, während die Gleichspannung $U_{dB}$ und $U_d$ die von $\Delta U_B$ erzeugte Schwingung zeigen. Entsprechend der Spannungsdifferenz $U_{dA} - U_{dB}$ entsteht auch im Gleichstrom id eine Resonanzfrequenz, so daß die übertragene Wirkleistung $P_d$ erhebliche Pulsationen enthält. Die HGÜ wird somit zu einem gewissen Grad durchlässig für die Resonanzerscheinungen des Netzes NB, die letztlich ins Netz NA eingekoppelt und erst dort gedämpft werden.

Wird nun aus $U_d$ und $i_d$ die Vorsteuergröße $\Delta U_A$ gebildet, so ist die Gleichspannung $U_{dA}$ nunmehr proportional $\Delta x_A + \Delta U_A$, wobei $\Delta U_A$ nunmehr so bestimmt ist, daß an der HGÜ die treibende Spannung $U_{dB} - U_{dA}$ konstant wird und somit einen konstanten Gleichstrom $i_d$ erzeugt.

Durch diese Konstanthaltung des HGÜ-Stromes wird die Durchlässigkeit der HGÜ und somit die Dämpfung der Resonanz in NB stark erhöht, und die HGÜ geht nach Schließen des Schalters 125 vom Zustand II schnell wieder in den Zustand I über.

Um dabei die Wirkung der Vorsteuergröße $\Delta U_A$ besser veranschaulichen zu können, ist in Fig. 2 mit III ein Betriebszustand gezeigt, bei dem durch Aufschalten einer zusätzlichen Steuergröße $\Delta U_B$ auf den Ausgang des Reglers 4B im Netz NB der Zustand mit der angeregten Resonanzfrequenz künstlich aufrechterhalten wird. Man erkennt bei dieser Simulation deutlich, daß im Zustand III die Gleichspannung $U_{dB}$, $U_d$ und $U_{dA}$ proportional und phasengleich sind, so daß die gewünschte Konstanthaltung des Gleichstroms sichergestellt ist. Allerdings ist dies mit einer Pulsation der Wirkleistung $P_d$ verbunden, wobei nunmehr die aufgeschaltete Vorsteuergröße $\Delta U_a$ in das Netz NA eine gewisse Oberwelligkeit einkoppelt. Da aber der Zustand III, bei dem die Resonanz im Netz NB eine erhebliche Amplitude aufweist und die Vorsteuergröße $\Delta U_A$ aufgeschaltet ist, nur unmittelbar nach Schließen des Schalters 125 auftritt und somit der Zustand III nur kurzfristig beim Übergang vom Zustand II in den Zustand I angenommen wird, ist diese Pulsation der Wirkleistung und die ins Netz NA eingekoppelte Störfrequenz praktisch ohne Bedeutung.

Dadurch wird es möglich, durch einen entsprechenden Eingriff in die Steuerung des Gleichrichters eine Resonanzerscheinung im Netz NB zu unterdrücken, indem die Ursache, nämlich die Reflexion der Störschwingung, praktisch beseitigt wird.

**Patentansprüche**

1. Verfahren zum Unterdrücken von Resonanzerscheinungen einer Energieübertragungsanlage mit einer Hochspannungsgleichstromübertragungsstrecke (HGÜ) zwischen zwei Wechselspannungsnetzen, wobei ein an das erste Wechselspannungsnetz (NA) angeschlossener, netzgetakteter, als Gleichrichter betriebener erster Stromrichter (1A) durch Stromentnahme aus dem ersten Wechselspannungsnetz der HGÜ einen Gleichstrom ($i_d$) einprägt, der von einer vorgegebenen Steuerspannung $\Delta x_a$ und einer Vorsteuergröße bestimmt wird, und ein zweiter, in das zweite Wechselspannungsnetz einspeisender, als Wechselrichter betriebener zweiter Stromrichter (1B) die übertragene Gleichspannung der HGÜ bestimmt und wobei die Vorsteuergröße gebildet wird, indem aus einem Gleichstromkreis der HGÜ abgegriffenen Meßwert mittels eines auf eine kritische Frequenz abgestimmten Filters eine Oberschwingungskomponente isoliert und amplitudenverstärkt wird, dadurch gekennzeichnet, daß zum Unterdrücken der Resonanzerscheinungen in dem wechselrichterseitigen zweiten Wechselspannungsnetz (NB) als Meßwert der übertragene Gleichstrom erfaßt wird, daß die kritische Frequenz des Filters auf eine von der Resonanzerscheinung hervorgerufene Resonanzschwingungskomponente der Gleichspannung und die Phasendrehung der isolierten Oberschwingungskomponente derart auf die durch die Steuerung des ersten Stromrichters hervorgerufene Phasenverschiebung zwischen dem Meßwert des übertragenen Gleichstroms und der vom ersten Stromrichter erzeugten Gleichspannung abgestimmt wird, daß durch die Vorsteuergröße der Ausgangssannung des ersten Stromrichters eine Oberschwingungskomponente eingeprägt wird, die mit der Resonanzschwingungskomponente der Gleichspannung ungefähr in Phase ist.

2. Verfahren nach Anspruch 1, dadurch gekennzeichnet, daß zur Vorsteuerung zusätzlich eine Schwingungskomponente verwendet wird, die aus dem Meßwert der übertragenen Gleichspannung ($U_d$) ausgefiltert und deren Phasendrehung und Verstärkung auf einen durch die Frequenz der Resonanzschwingungskomponente und die Amplitude von Gleichstrom oder Gleichspannung oder durch andere Betriebsgrößen gegebenen Arbeitspunkt und auf die durch die Schaltverzögerung des ersten Stromrichters, die Phasenverschiebung bei der Meßwerterfassung und gegebenenfalls weitere, die Zeitkonstante der Vorsteuerung bestimmende Phasenverschiebung abgestimmt wird.

3. Verfahren nach Anspruch 2, dadurch gekennzeichnet, daß die Phasendrehungen und die Verstärkungen konstant so abgestimmt werden, daß für veränderliche Arbeitspunkte eine stabile Dämpfung erreicht wird.

4. Verfahren nach Anspruch 2 oder 3, dadurch gekennzeichnet, daß der Meßwert der übertragenen Gleichspannung am Ende einer dem Gleichspannungsausgang des ersten Stromrichters nachgeschalteten Stromrichterdrossel (LA) abgegriffen wird.

5. Verfahren nach Anspruch 1, dadurch gekennzeichnet, daß aus dem Meßwert ($i_d$) des HGÜ-Gleichstroms unter Phasendrehung um etwa 90° die von der Resonanzerscheinung im zweiten Wechselspannungsnetz (NB) hervorgerufene Resonanzschwingungskomponente ($i'_d$) des HGÜ-Stroms ausgefiltert wird.

6. Verfahren nach Anspruch 5, dadurch gekennzeichnet, daß die ausgefilterte und in ihrer Phase gedrehte Resonanzschwingungskomponente des HGÜ-Stroms durch Differenzieren und ggf. anschließendes Glätten des Strommeßwertes gewonnen wird.

7. Verfahren nach einem der Ansprüche 1 bis 6, dadurch gekennzeichnet, daß nur eine vorübergehende Addition der Vorsteuerspannung ausgelöst wird, wenn die Amplitude der ausgefilterten Resonanzschwingungskomponente der Spannung oder des Stromes einen vorgegebenen Grenzwert überschreitet.

8. Vorrichtung von Resonanzerscheinungen in der wechselrichterseitigen Wechselspannung einer HGÜ, bei der ein Regler (4A) eine Steuerspannung ($\Delta x_A$) liefert, ein mit der Steuerspannung angesteuerter und an ein erstes Wechselspannungsnetz (NA) angeschlossener erster Stromrichter (1A) der HGÜ einen vom Regler (4A) bestimmten Gleichstrom ($i_d$) einprägt, eine an der HGÜ angeordnete Meßanordnung mit einem nachgeordneten Filterkreis (10) eine dem Steuerwinkel aufzuschaltende Vorsteuergröße ($\Delta U_A$) bildet, und die Leitungen (2, 3) der HGÜ an die gleichspannungsseitigen Eingänge eines in ein zweites Wechselspannungsnetz (NB) einspeisenden zweiten Stromrichters (1B) angeschlossen sind, dadurch gekennzeichnet, daß der Filterkreis (10), bestehend aus einem Bandfilter (101) und Verstärker (102), auf die Frequenz einer durch die Resonanzerscheinung der zweiten Wechselspannung (NB) bedingten Resonanzschwingung in der Spannung des HGÜ-Kreises abgestimmt ist und aus der dieser Resonanzfrequenz entsprechende Schwingungskomponente des Meßwertes unter Phasendrehung und Amplitudenverstärkung die Vorsteuergröße ($\Delta U_A$) bildet, und so auf ein dem Regler (4A) nachgeordnetes Additionsglied schaltet, daß der HGÜ-Spannung vom ersten Stromrichter eine zur Resonanzschwingung der Spannung gleichphasige Schwingung eingeprägt wird.

9. Vorrichtung nach Anspruch 8, dadurch gekennzeichnet, daß die Meßanordnung ein Meßglied für den HGÜ-Strom ($i_d$) und ein Meßglied für die Spannung ($U_d$) der HGÜ und der Filterkreis für jedes Meßglied ein Filter (10, 11) und ein nachgeschaltetes Additionsglied für die Filterausgangssignale enthält.

10. Vorrichtung nach Anspruch 9, dadurch gekennzeichnet, daß der dem Strommeßglied nachgeschaltete Filter (11) einen Differenzierer (111) für den Strommeßwert und ein in Reihe geschaltetes Glättungsglied (112) enthält.

11. Vorrichtung nach einem der Ansprüche 8 bis 10, gekennzeichnet durch ein Erfassungsglied (121, 122), das die Amplitude der im Strommeßwert oder Spannungsmeßwert enthaltenen Resonanzschwingung erfaßt, ein Schwellwertglied (123) für die erfaßte Amplitude und ein nachgeschaltetes, bei Überschreiten eines vorgegebenen Schwellwertes der Amplitude angestoßenes Zeitglied (124), und einen vom Ausgangssignal des Zeitgliedes schließbaren Schalter (125) zum Aufschalten der Vorsteuergröße auf ein dem Regler (4A) nachgeordnetes Additionsglied.

## Claims

1. Method for suppressing resonance phenomena of a power transmission installation with high voltage direct current transmission link (HVDCT) between two alternating voltage networks, whereby a first power converter (1A), which is connected to the first alternating voltage network (NA), is network-clocked and is operated as a rectifier, impresses through current drain from the first alternating voltage network of the HVDCT a direct current ($i_d$) which is determined by a given control voltage ($\Delta x_a$) and a precontrol variable and a second power converter (1B), which feeds into the second alternating voltage network and is operated as an inverter, determines the transmitted direct voltage of the HVDCT and whereby the precontrol variable is established in that a harmonic oscillation component is isolated from a measured value, picked off at the direct current circuit of the HVDCT, by means of a filter tuned to a critical frequency and is amplified in terms of amplitude, the characterised in that in order to suppress the resonance phenomena in the inverter-side second alternating voltage network (NB) the transmitted direct current is detected as a measured value, that the critical frequency of the filter is tuned to a resonance oscillation component of the direct voltage brought about by the resonance phenomenon and the phase rotation of the isolated harmonic oscillation component is tuned in such a way to the phase displacement, brought about by the control of the first power converter, between the measured value of the transmitted direct current and the direct voltage generated by the first power converter, that a harmonic oscillation component, which is substantially in phase with the resonance oscillation component of the direct voltage, is impressed by the precontrol variable of the output voltage of the first power converter.

2. Method according to claim 1, characterised in that there is used for the purposes of precontrol, in addition, an oscillation component which is filtered out of the measured value of the transmitted direct voltage ($U_d$) and the phase rotation and amplification of which are tuned to a working point given by the frequency of the resonance oscillation component and the amplitude of direct current or direct voltage or by other operating variables and the phase displacement determining through the switching delay of the first power converter, the phase displacement in the case of the measured value detection and, if applicable, further phase displacement determining the time constant of the precontrol.

3. Method according to claim 2, characterised in that the phase rotations and the amplifications are tuned in a constant manner so that stable damping is achieved for variable working points.

4. Method according to claim 2 or 3, characterised in that the measured value of the transmitted direct voltage is picked off at the end of a power converter choke (LA) subsequently connected to the direct voltage output of the first power converter.

5. Method according to claim 1, characterised in that the resonance oscillation component ($i'_d$) of the HVDCT current brought about by the resonance phenomenon in the second alternating voltage network (NB) is filtered out of the measured value ($i_d$) of the HVDCT direct current with phase rotation by approximately 90°.

6. Method according to claim 5, characterised in that the filtered-out resonance oscillation component of the HVDCT current rotated in its phase is obtained through differentiation and, if applicable, subsequent smoothing of the current measured value.

7. Method according to one of the claims 1 to 6, characterised in that only a transient addition of the precontrol voltage is initiated when the amplitude of the filtered-out resonance oscillation component of the voltage or of the current crosses a given limiting value.

8. Arrangement for suppressing resonance phenomena in the inverter-side alternating voltage of an HVDCT, in which a regulator (4A) supplies a control voltage ($\Delta X_A$), a first power converter (1A) of the HVDCT, which converter is activated with the control voltage and is connected to a first alternating voltage network (NA), impresses a direct current ($i_d$) determined by the regulator (4A), a measuring arrangement arranged at the HVDCT establishes with a subsequently arranged filter circuit (10) a precontrol variable ($\Delta U_A$) which is to be applied to the control angle and the lines (2, 3) of the HVDCT are connected to the direct voltage-side inputs of a second power converter (1B) feeding into a second alternating voltage network (NB), characterised in that the filter circuit (10) consisting of a band filter (101) and amplifier (102) is tuned to the frequency of a resonance oscillation, which is conditional upon the resonance phenomenon of the second alternating voltage (NB), in the voltage of the HVDCT-circuit and establishes the precontrol variable ($\Delta U_A$) from the oscillation component of the measured value corresponding to this resonance frequency with phase rotation and amplitude amplification and connects to an addition element arranged after the regulator (4A) so that an oscillation in phase with the resonance oscillation of the voltage is impressed upon the HVDCT voltage from the first power converter.

9. Arrangement according to claim 8, characterised in that the measuring arrangement contains a measuring element for the HVDCT current ($i_d$) and a measuring element for the voltage ($U_d$) of the HVDCT and the filter circuit for each measuring element contains a filter (10, 11) and a subsequently connected addition element for the filter output signals.

10. Arrangement according to claim 9, characterised in that the filter (11) which is subsequently connected to the current measuring element contains a differentiator (111) for the current measured value and a smoothing element (112) connected in series.

11. Arrangement according to one of the claims 8 to 10, characterised by a detection element (121, 122) which detects the amplitude of the resonance oscillation contained in the current measured value or in the voltage measured value, a threshold value element (123) for the detected amplitude and a subsequently connected timing element (124) which is triggered when a given threshold value of the amplitude is crossed, and a switch (125) which can be closed by the output signal of the timing element for the application of the precontrol variable upon an addition element arranged after the regulator (4A).

**Revendications**

1. Procédé pour réduire des phénomènes de résonance d'une installation de transmission d'énergie comportant une voie de transmission à haute tension et à courant continu (HGÜ) située entre deux réseaux à tension alternative, et selon lequel un premier convertisseur statique (1A) raccordé au premier réseau à tension alternative (NA) commandé de façon cadencée par ce réseau et fonctionnant en tant que redresseur, injecte, par prélèvement de courant à partir du premier réseau à tension alternative de l'installation (HGÜ), un courant continu ($i_d$), qui est déterminé par une tension de commande prédéterminée ($\Delta Xa$) et par une grandeur de commande pilote, et un second convertisseur statique (1B) alimentant le second réseau à tension alternative et fonctionnant en tant qu'onduleur, détermine la tension continue transmise de l'installation (HGÜ), et selon lequel la grandeur de commande pilote est formée grâce au fait qu'une composante d'oscillation harmonique est isolée à partir d'une valeur de mesure prélevée dans le circuit à courant continu de l'installation (HGÜ), au moyen d'un filtre réglé sur une fréquence critique, et que son amplitude est amplifiée, caractérisé par le fait que pour réduire les phénomènes de résonance dans le second réseau à tension alternative (NB) situé sur le côté-onduleur, on détermine comme valeur de mesure le courant continu transmis, qu'on règle la fréquence critique du filtre sur une composante d'oscillation de résonance, provoquée par le phénomène de résonance, de la tension continue et qu'on règle la rotation de phase de la composante d'oscillation harmonique isolée sur le déphasage provoqué par la commande du premier convertisseur statique, entre la valeur de mesure du courant continu transmis et la tension continue produite par le premier convertisseur statique, de manière à injecter, au moyen de la grandeur de commande pilote de la tension de sortie du premier convertisseur statique, une composante d'oscillation harmonique, qui est approximativement en phase avec la composante d'oscillation de résonance de la tension continue.

2. Procédé suivant la revendication 1, caractérisé par le fait que pour réaliser la commande pilote, on utilise en outre une composante d'oscillation, qui est extraite par filtrage à partir de la valeur de mesure de la tension continue transmise ($U_d$) et dont la rotation de phase et l'amplification sont réglées sur un point de travail déterminé par la fréquence de la composante d'oscillation de résonance et par l'amplitude du courant continu ou de la tension continue ou par d'autres grandeurs de service, et sur le déphasage qui détermine la constante de temps de la commande pilote, au moyen du retard de commutation du premier convertisseur statique, du déphasage obtenu lors de l'acquisition des valeurs de mesure et éventuellement d'autres paramètres.

3. Procédé suivant la revendication 2, caractérisé par le fait que les rotations de phase et les amplifications sont réglées de façon constante de manière à obtenir un affaiblissement stable pour des points de travail variables.

4. Procédé suivant la revendication 2 ou 3, caractérisé par le fait que la valeur de mesure de la tension continue transmise est prélevée à l'extrémité d'une bobine d'arrêt (LA) du convertisseur statique, branchée en aval de la sortie à courant continu du premier convertisseur statique.

5. Procédé suivant la revendication 1, caractérisé par le fait que la composante d'oscillation de résonance ($i'_d$) du courant (HGÜ), qui est produite par le phénomène de résonance dans le second réseau à tension alternative (NB), est extraite par filtrage à partir de la valeur de mesure ($i_d$) du courant continu de HGÜ, moyennant une rotation de phase d'environ 90°.

6. Procédé suivant la revendication 5, caractérisé par le fait que la composante d'oscillation de résonance, qui est extraite par filtrage et dont la phase 5 est pivotée, du courant continu de HGÜ est obtenue par différentiation et éventuellement lissage ultérieur de la valeur de mesure du courant.

7. Procédé suivant l'une des revendications 1 à 4, caractérisé par le fait que seule une addition transitoire de la tension de commande pilote est déclenchée lorsque l'amplitude de la composante d'oscillations de résonance, extraite par filtrage, de la tension ou du courant dépasse une valeur limite prédéterminée.

8. Dispositif pour réduire les phénomènes de résonance dans la tension alternative, présente du côté onduleur, d'une installation (HGÜ), et dans lequel un régulateur (4A) délivrant une tension de commande ($\Delta x_A$), un premier convertisseur de courant (1A) de l'unité (HGÜ), commandé par la tension de commande et raccordé à un premier réseau à tension alternative (NA), injecte un courant continu ($i_d$) déterminé par le régulateur (4A), un dispositif de mesure, qui est disposé dans l'installation (HGÜ) et en aval duquel est branché un circuit de filtre (10), forme une grandeur de commande pilote ($\Delta U_A$) devant être ajoutée à l'angle de commande, et les lignes (2, 3) de l'installation (HGÜ) sont raccordées aux entrées, situées du côté de la tension continue, d'un second convertisseur statique (1B) alimentant un second réseau à tension alternative (NB), que le circuit de filtre (10), qui est constitué par un filtre de bande (101) et un amplificateur (102), est réglé sur la fréquence d'une oscillation de résonance, conditionnée par le phénomène de résonance de la seconde tension alternative (NB) et apparaissant dans la tension du circuit de l'installation (HGÜ) et forme, à partir de la composante d'oscillation de la valeur de mesure, qui correspond à cette fréquence de résonance, et ce moyennant une rotation de phase et une amplification d'amplitude, la grandeur de commande pilote ($\Delta U_A$) et l'envoie à un circuit additionneur branché en aval du régulateur (4A), de sorte qu'une oscillation de même phase que l'oscillation de résonance de la tension est appliquée par le premier convertisseur statique à la tension de l'installation (HGÜ).

9. Dispositif suivant la revendication 8, caractérisé par le fait que le dispositif de mesure contient un circuit de mesure du courant ($i_d$) de l'installation (HGÜ) et un circuit de mesure de la tension ($U_d$) de l'installation (HGÜ) et que le circuit de filtre prévu pour chaque circuit de mesure contient un filtre (10, 11) et un circuit additionneur branché en aval pour les signaux de sortie du filtre.

10. Dispositif suivant la revendication 9, caractérisé par le fait que le filtre (11) branché en aval du circuit de mesure du courant contient un circuit différentiateur (111) pour la valeur de mesure du courant et un circuit de lissage (112) branché en série.

11. Dispositif suivant l'une des revendications 8 à 10, caractérisé par un circuit de détection (121, 122), qui détecte l'amplitude de l'oscillation de résonance contenue dans la valeur de mesure du courant ou dans la valeur de mesure de la tension, un circuit à valeur de seuil (123) pour l'amplitude détectée et un circuit de temporisation (124) branché en aval et déclenché lors du dépassement d'une valeur de seuil prédéterminée de l'amplitude, et un interrupteur (125) pouvant être fermé par le signal de sortie du circuit de temporisation et servant à envoyer la grandeur de commande pilote à un circuit additionneur branché en aval du régulateur (4A).

FIG 1

FIG 2